# EUROPEAN PATENT APPLICATION

(11) **EP 4 838 400 A1**
(43) Date of publication of application: **11.11.2026**
(21) Application number: 25305643.6
(22) Date of filing: 06.05.2025
(51) Int. Cl.: G06F 30/27, G06F 119/18

(54) **LEARNING ONE OR MORE RELATIONSHIPS BETWEEN A SET OF DESIGN AND/OR MANUFACTURING PARAMETERS OF A PRODUCT TO BE MANUFACTURED AND A SET OF ONE OR MORE PROPERTIES OF THE PRODUCT**

(71) Applicant: Dassault Systèmes, 78140 Vélizy-Villacoublay (FR)
(72) Inventor: TLILI, Ali, 78140 Vélizy-Villacoublay (FR); KHALED, Oumaima, 78140 Vélizy-Villacoublay (FR)
(74) Representative: Bandpay & Greuter

(57) **Abstract**

The disclosure notably relates to a computer-implemented method of machine-learning. The method is for learning one or more relationships between a set of design and/or manufacturing parameters of a product to be manufactured and a set of one or more properties of the product. The method comprises obtaining a training dataset comprising training examples. Each training example comprises example values of the parameters of the set and corresponding ground truth values of the one or more properties. The method further comprises training a machine-learning model based on the training dataset. The model is trained to infer the one or more relationships.

## Description

### TECHNICAL FIELD

The disclosure relates to the field of computer programs and systems, and more specifically to a method, system and program for learning one or more relationships between a set of design and/or manufacturing parameters of a product to be manufactured and a set of one or more properties of the product.

### BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Within this context, design and manufacturing processes often comprise an optimization step where performance (e.g. with respect to use and/or manufacturing) of the part/product being designed is optimized, e.g. with respect to some constraints.

In mechanical manufacturing, optimizing component performance has traditionally relied on explicit, well-defined relationships between design parameters, manufacturing processes, and the resulting properties of components. Conventional methods often use deterministic models that may not capture the complex, non-linear interactions between the properties of the product/component and parameters inherent in manufacturing processes and/or design parameters of the product.

Within this context, there is still a need for improved solutions for inference of relationships between a set of design and/or manufacturing parameters of a product to be manufactured and a set of one or more properties of the product, and for optimization of the properties of the product.

### SUMMARY

It is therefore provided a computer-implemented method of machine-learning. The method is for learning one or more relationships between a set of design and/or manufacturing parameters of a product to be manufactured and a set of one or more properties of the product. The method comprises obtaining a training dataset comprising training examples. Each training example comprises example values of the parameters of the set and corresponding ground truth values of the one or more properties. The method further comprises training a machine-learning model based on the training dataset. The model is trained to infer the one or more relationships.

The method may comprise one or more of the following features:
- training the machine-learning model comprises:
   ∘ training several machine-learning models; and
   ∘ selecting the best models by rewarding a high model evaluation score; and/or
- the several machine-learning models include two or any combination of:
   ∘ a linear regression model;
   ∘ a random forest model;
   ∘ a support vector machine (SVM) model;
   ∘ a classification and regression trees (CART) model;
   ∘ a gradient boosting machine (GBM) model; and
   ∘ a multi-layer perceptron (MLP) model.

It is also provided a machine-learning model obtainable according to the method, i.e. a machine-learning model having weights and/or parameters with values that would have been set by the training according to the method. For example, the machine-learning model may be the model directly obtained (trained) by the method, with the values of its weights and/or parameters set by the training according to the method.

It is also provided a computer-implemented method of use of the model. The method of use is for performing an optimization of at least one property of one or more properties of a product to be manufactured based on a set of design and/or manufacturing parameters of the product. The method of use comprises, by using one or more relationships inferred by the model between the set of parameters and the one or more properties, formulating an optimization problem for performing the optimization. The method of use may further comprise one or more of the following features:
- formulating the optimization problem comprises formulating one or more objective functions for the optimization problem based on the one or more relationships;
- the one or more objective functions comprise:
   ∘ a function produced by the model; and/or
   ∘ one or more functions each representing a respective maximization or minimization relationship between at least one property and at least one parameter;
- formulating the optimization problem further comprises formulating one or more constraints for the optimization problem based on the model and/or on its training dataset;
- formulating one or more constraints for the optimization problem based on the model and/or on its training dataset comprises one or more of:
   ∘ determining one or more ranges of parameter values beyond which the model provides unreliable or unacceptable predictions;
   ∘ determining a boundary that the optimization must not cross based on outcomes of the model labeled unacceptable or acceptable;
   ∘ determining one or more thresholds of property values beyond which the model provides unreliable or unacceptable predictions; and/or
   ∘ determining a data region enclosing typical parameter values and outside of which parameters values are considered unacceptable;
- the method further comprises solving the optimization problem;
- the method further comprises:
   ∘ providing the optimization problem to a user;
   ∘ by the user, providing a text request related to the optimization problem, the request being one of:
      ▪ requesting a test of modification of one or more manufacturing and/or design parameters of the product; or
      ▪ requesting an explanation of a result of the optimization problem; and
   ∘ automatically:
      ▪ if the request is requesting an explanation of a result of the optimization problem, by a first trained LLM-based module, providing the explanation; and
      ▪ if the request is requesting a test of modification of one or more manufacturing and/or design parameters of the product, by a second trained LLM-based module, providing a result of the optimization problem based on the modification and on the one or more relationships; and/or
- the method further comprises using a result of the optimization for manufacturing the product with the optimized one or more properties.

It is further provided a computer program comprising instructions for performing the method and/or the method of use.

It is further provided a device comprising a data storage medium having recorded thereon the computer program and/or the machine-learning model.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG.s 1-2 illustrate the methods disclosed herein; and

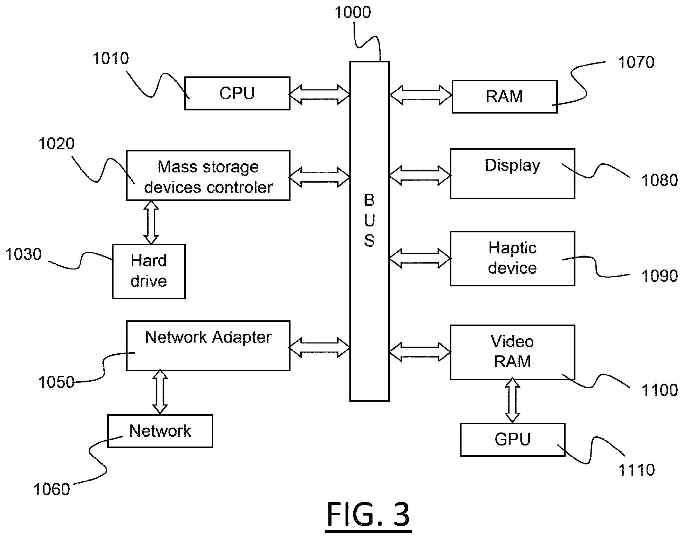

- FIG. 3 shows an example of the computer system.

### DETAILED DESCRIPTION

It is proposed a computer-implemented method of machine-learning. The method is for learning one or more relationships between a set of design and/or manufacturing parameters of a product to be manufactured and a set of one or more properties of the product. The method comprises obtaining a training dataset comprising training examples. Each training example comprises example values of the parameters of the set and corresponding ground truth values of the one or more properties. The method further comprises training a machine-learning model based on the training dataset. The model is trained to infer the one or more relationships. The method may be referred to as "the learning method".

The learning method constitutes an improved solution for inference of relationships between a set of design and/or manufacturing parameters of a product to be manufactured and a set of one or more properties of the product, and thereby for optimization of these properties.

First of all, the learning method trains a model to infer the implicit and complex relationships that inherently exist between properties of a product and its design manufacturing parameters. Where traditional part optimization frameworks are based on known dependencies between properties and design and/or manufacturing parameters, and do not know the hidden dependencies that may exist, the learning method allows to find such hidden dependencies. This allows to further improve the optimization of the properties of the product, where traditional optimization framework may comprise the risk of obtaining suboptimal products because hidden relationships have not been accounted for. The trained model thus effectively uncovers hidden correlations between design/manufacturing parameters and component performance, leading to more accurate and insightful optimization outcomes. Furthermore, the approach of the proposed method is applicable to various components and industries. Its scalability ensures that as the complexity of the manufacturing processes grows, the method can handle the increased demands without additional strain on the user. These advantages are further materialized in the method of use which may comprise actually performing an optimization in that context. Furthermore, the learnt model may be used in the interactive optimization method further discussed hereinafter.

The method is a method of machine-learning. Specifically, the method trains a model, based on the training dataset, to infer one or more relationships between design and/or manufacturing parameters of a given product to be manufactured, and one or more properties of that product.

As known per se from the field of machine-learning, the processing of an input by a model includes applying operations to the input, the operations being defined by data including weight values or parameters. Learning a model (e.g. a neural network or a regressor) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "learning a model based on a dataset", it is meant that the dataset is a learning/training dataset of the model, based on which the values of the weights/parameters are set. In the present disclosure, the training dataset is the dataset of training examples, on which the function is trained.

As known per se from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers define the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction, such as the mean square error (MSE). Second, an optimizer, which modifies the model's weights and biases during the training process to minimize the loss function. Each optimizer has its own set of hyperparameters.

The method applies to a given product, i.e. the model learns the relationship(s) for that given product. In other words, the learnt relationship(s) hold(s) only for that product and the properties and parameters of that product. The product may be any mechanical part, such as an automotive driveshaft.

The one or more properties are one or more properties of the product, also referred to as "attributes" or "performance indicators". Each property is a property or performance indicator of the product, for example during use and/or manufacturing. For example, if the product if an automotive driveshaft, the properties may consist in one or any combination of the following properties: Tensile strength (expressed in MPa), Fatigue resistance (number of cycles before failure), Weight (in Kg), and Corrosion resistance rating (for example expressed as one class of C1 (very low), C2 (low), C3 (medium), C4 (high), C5 (very high)). These properties may be properties to optimize before manufacturing the product, as further discussed hereinafter.

The parameters of the product comprise one or more parameters. Each parameter is either a design parameter or a manufacturing parameter. A design parameter is a parameter which affects the design of the product, such as a parameter affecting the geometry of the product or a parameter affecting a material constitutive of the product. A manufacturing parameter is a parameter of the manufacturing process used for manufacturing the product and/or of the manufacturing machine used for manufacturing the product. For example, if the product is an automotive driveshaft, the parameters may consist in one or more of the following parameters: Material composition (in percentage of alloy elements), Heat treatment process (indication of the process, *e.g.* as one of quenching, tempering, and normalization), Cutting speed (*i.e*. of the cutting tool for manufacturing the part, expressed in m/min), Feed rate (*i.e.* the speed at which the cutting tool advances into the material during a machining process, expressed in mm/rev (millimeter per revolution)), Tool type (indication of the tool type, *e.g.* as one of carbide and high-speed steel), and Lubricant type (*e.g.* one of type A and type B).

The method comprises obtaining a training dataset. The training dataset comprises training examples. All training examples are relative to the same product, *i.e.* all training examples comprise examples of parameter values and ground truth properties values for that product. For example, if the product is an automotive drive shaft as discussed above, all examples comprise values of the parameters and the properties of the automotive drive shaft discussed above.

Each training example comprises example values of the parameters of the set, *i.e.* for each respective one of the design and/or manufacturing parameters, the training example comprises a respective value of that respective parameter. For example, if the product is an automotive driveshaft as previously discussed, each training example may comprise any one or any combination of: a value in percentage of alloy elements, a value indicating a heat treatment process among quenching, tempering, and normalization, a cutting speed value in m/min, a feed rate in mm/rev, a value indicating a tool type among carbide and high-speed steel, and/or a value indicating a lubricant type among type A or type B.

Each training example also comprises corresponding ground truth values of the one or more properties, i.e. ground truth values of the one or more properties when the parameters have as values the example values. These ground truth values consist in, for each respective property of the one or more properties, a respective value of that respective property. For example, if the product if an automotive driveshaft, the values of the properties may consist in one or any combination: a tensile strength values in MPa, a fatigue resistance values expressed as a number of cycles before failure, a weight values in Kg, and a corrosion resistance rating values expressed as one of C1 (very low), C2 (low), C3 (medium), C4 (high), C5 (very high)).

The ground truth values are of course not arbitrary but are or at least correspond to real ground truth values of the properties observed (*e.g.* measured) in the real world, *i.e.* in a real example of the product, for the corresponding parameter values. The training examples may, for example, consist in or at least comprise training examples of parameters values and corresponding ground truth property values measured in the real world (during the manufacturing process, during post-manufacturing tests, and/or during maintenance operations) on real examples of the product, and/or values known from the real-world, such as values of material properties (*e.g.* strength, stiffness, heat conduction, electric conduction, or the like) known to be associated with a certain material composition, chemical composition/structure and/or crystal structure. Such training examples may be referred to as "real-world" training examples, as them stem from real-world physical measurements on real-world examples of the product. Additionally or alternatively, the training examples may consist or at least comprise training examples of parameters and properties values not per se measured for real-world products but synthetized from "real-world" training examples using any suitable synthetization process for generating, from real-world data, corresponding realistic synthetic data. This may notably be the case for products for which real-world examples are few/in too small numbers for allowing a robust learning, due to confidentiality matters on the side of the companies that manufacture them.

Obtaining the training dataset may comprise acquiring the real-world training examples, either by actually performing the required measurements or by obtaining these measurements from a (*e.g.* remote) memory or database where they have been stored. Alternatively or additionally, obtaining the training dataset may comprise performing the synthetization process previously discussed. Yet alternatively, obtaining the training dataset may simply consist in obtaining it from a (e.g. distant) memory or database where the training examples are already stored.

Prior to training a machine-learning model based on the training dataset, the learning method may comprise a step of preprocessing the training dataset, which may comprise one or any combination of the following steps:
- Normalization: scale all numerical values (of the parameters and properties) to a common range, for example [0,1], to prevent bias in the training;
- Feature engineering: add additional parameters and/or properties values to all examples based on known relationships with the already present parameters and/or properties. For example, in the automotive drive shaft discussed above, a hardness ratio value may be added to each example based on its material composition value and heat treatment value and/or a machinability index value may be added to each example based on the cutting speed value, the feed rate value, and the tool type value. Harness ratio is a design parameter and machinability index is a manufacturing parameter.

The learning method then further comprises training the machine-learning model based on the training dataset, *i.e.* as known per se from machine-learning and as discussed above, feeding the model with the training examples' parameter values and modifying the parameters of the model until it provides results sufficiently in line (with respect to some convergence/end of training criterion, as known *per se*)*.* The model is trained to infer one or more relationships between the properties and the parameters. Each relationship is a sequence of one or more mathematical and/or logical operations which calculates/infers the value of the properties based on input values of the parameters. That sequence is the sequence of operations performed by the model when fed as input the input values of the parameters. The meaning of "one or more relationships" is explained as follows: the model infers a global relationship, which consists in the sequence of operations performed by the model and which, by processing the input values of the parameters, yield the values of each property. However, if the one or more properties comprise several properties, by inferring the values of all properties based on the input parameters values, the model inherently infers the particular value of each single property based on the inputs. Each such particular inference is also a relationship between the corresponding single property and the parameters. It is to be understood that, given all properties of interest of a particular product, the method can be either applied once to infer that general global relationhip between all the properties and the parameters of the product, or may be applied repeatedly to various subsets of said all the properties (*e.g.* to each single property separately), to infer specifically relationships each between a subset and the parameters.

Training the machine-learning model may comprise training several machine-learning models and then selecting the best models by rewarding a high model evaluation score.

The training of the several models may comprise:
- Splitting the dataset into training and testing sets (e.g., 80% training, 20% testing);
- Training each model using the training set;
- Optionally, performing hyperparameter tuning using cross-validation to optimize model performance.

The selection of the best model may then comprise evaluating each model on the testing set by computing the model evaluation score and selecting the model having the best evaluation score. The evaluation score may be: the Mean Squared Error (MSE) (which measures average squared difference between predicted and ground truth values), the R-squared error (R²) (which indicates the proportion of variance explained by the model, or the Root Mean Squared Error (RMSE) (which measures the Square root of MSE, providing error in the same units as the target variable). For these examples of scores, the best model is the one having the smallest error.

The several machine-learning models may include two or any combination of (*e.g.* all of) a linear regression model, a random forest model, a support vector machine (SVM) model, a classification and regression trees (CART) model, a gradient boosting machine (GBM) model, and a multi-layer perceptron (MLP) model.

As known *per se,* the linear regression model is a statistical model used to model the relationship between input variables and output variables. In the present case, the linear regression model models the relationship between the parameters (input variables) and the properties (output variables). The goal of linear regression is to find the best-fitting line (or hyperplane in higher dimensions) that predicts the dependent variable based on the independent variables.

If the one or more properties consist in a single property, denoted *y*, the linear regression model computes *y* as $y = {β}_{0} + {\sum }_{i = 1}^{n} {β}_{i} {x}_{i} + ϵ$ where the *xᵢ* represent the parameters, *n* being the number of parameters, and for each *i*, *βᵢ* is the coefficient associated with the parameter *xᵢ*. *β*₀ is the so-called intercept coefficient (the value of *y* when *x* = 0), and *ε* is the error term (difference between the predicted values of y and its ground truth values). As known *per se,* learning the model consists in feeding the model with examples of values of the *xᵢ* and modifying the values of the coefficients *βᵢ* by minimizing the error (e.g. mean square error) between the calculated values of *y* for the training examples fed as input and the ground truth value of *y* of these training examples. Once the model is trained, it predicts the value of the property for any input values of the parameters *xᵢ.*

If the one or more properties consist in several properties *Y* = (*yⱼ*)_{1≤*j*≤*m*}, the linear regression model is multivariate, *i.e.* computes *Y* as: $Y = Xβ + E$ where, *Y* being an *m* × 1 vector, *X* is the *n* × 1 vector *X* = (*xᵢ*)_{1≤*i*≤*n*}, and *β* is the *n* × *m* matrix of coefficients *β_{i,j}* to infer during training, by minimization of an error (e.g. multi-dimensional means square error).

The random forest model is, as known *per se,* is an ensemble learning model used for classification and regression tasks. It operates by constructing multiple decision trees during training and outputs the class (for classification) or mean prediction (for regression) of the individual trees. In classification mode, the random forest is trained to take as input values for the parameters and to output a class (in a predefined set of classes) for the properties, where each tree predicts a class and the output class is the class with the majority vote. This mode (classification) is applied (and thus learnt) when the properties take a finite number of values (for example this is the case for the previously discussed corrosion resistance rating class), so that the possible properties values can be arranged into a finite set of classes. In the other cases (at least one property takes its values in a continuous range; for example, this is the case for the weight property), the random forest model is applied (and learnt) in regression mode, where each tree learns to predict the numerical values of each property, and the final (output) prediction is the average of all tree predictions. The random forest advantages are that it handles non-linear relationships and interactions between variables, whereas the linear regression model may not capture non-linear dependencies. The hyperparameters of the random forest model are the number of trees, the maximum depth, and the minimum samples split.

The Support Vector Machine (SVM) model is as known per se a supervised machine-learning model used for classification or regression (it also has a classification mode or setting and a regression mode or setting). The kernel functions may be linear, polynomial, or radial basis functions to capture non-linearities. In classification mode, it is trained to find the best hyperplane (also known as "decision boundary") that separates the training examples (into acceptable vs not acceptable classes) in the training dataset while maximizing the margin (distance between the closest points of each class to the hyperplane). These closest points are called support vectors. In classification setting, it thus outputs a definition of the decision boundary of the type "acceptable points satisfy *d*(*x*) *=* 0". In regression setting, instead of finding the boundary, it is trained to fit a function (which computes the values of the properties based on the values of the parameters) where most data points fall within a margin of tolerance. The support vectors are in this case the training examples that lie on or outside the margin of tolerance. As above, classification setting is used when the training examples have only discrete values, whereas regression setting is used when the training examples have at least some values in continuous ranges.

The CART (Classification and Regression Tree) model is, as known *per se,* a type of decision tree model. It forms a predictive model by recursively splitting the training dataset into subsets based on feature threshold to minimize a prediction error. It also has a classification setting (once more adapted for discrete training data) and a regression setting (once more adapted for continuous training data). In classification setting, the tree predicts discrete categories (e.g. corrosion resistance classes as discussed above). In regression setting, the tree predicts continuous values (e.g. weight values as discussed above).

The gradient boosting machine (GMB) model is, as known *per se,* a machine-learning model used for classification and regression tasks, *i.e*. it also has a classification setting (once more adapted for discrete training data) and a regression setting (once more adapted for continuous training data). It is an ensemble learning method that builds a series of decision trees (for classification) sequentially by sequentially fitting weak learners to minimize loss, each new tree correcting the error of the previous ones. Its advantages are its high predictive accuracy, and that it handles complex data structures.

The Multi-Layer Perception (MLP) is as known per se a neural network model, capable of modeling non-linear relationships. It has, as known per se, an input layer which receives the input (set of values of the parameters), then hidden layers with activation functions (for example ReLu or sigmoid) which process the input, and an output layer which outputs the values of the properties that results from the operations/processing performed by the previous layers.

It is also proposed a machine-learning model obtainable according to the learning method, *e.g*. the model trained and selected among the several trained model according to the learning method.

It is also proposed a computer-implemented method of use of the model. The method of use is for performing an optimization of at least one property of one or more properties of a product to be manufactured based on a set of design and/or manufacturing parameters of the product. The one or more properties and the parameters are of course those that the model has seen during training, *e.g.* those involved in the learning method. The method of use comprises, by using one or more relationships inferred by the model between the set of parameters and the one or more properties, formulating an optimization problem for performing the optimization. Indeed, as the relationship(s) inferred by the model correlates the values of the properties with the values of the parameters, these correlations/relationships can be translated into an optimization problem, where at least one of these properties is optimized with respect to the parameters being free variables of the optimization.

As known *per se,* an optimization problem comprises one or more objective functions to optimize (*i.e*. to minimize or to maximize) by varying free variables of the functions (*i.e*. by finding the values of the free variables which optimize, or tend to optimize, the value of the objective function(s)). In the present case, each objective function to optimize is one of the properties (*e.g.* maximizing tensile strength) or a combination of properties (*e.g*. maximizing tensile strength and minimizing weight), and its free variables consist in one or more of the parameters (*e.g.* all of the parameters). Formulating the optimization problem may thus comprise formulating one or more objective functions for the optimization problem based on the one or more relationships.

The one or more objective functions may comprise or consist in a function produced by the model. This function consists in expressing the at least one property to optimize as the result of applying the model. This function thus depends on the parameters, *i.e*. it has all the parameters as free variables. The function is thus defined by the model (*e.g*. its weights and/or parameters). For example, for the previously-discussed automotive driveshaft, the at least one property may consist in the tensile strength *TS* and the objective function may be: $TS = f \left(parameters\right)$ where *f* is defined by the model. In other words, *f* corresponds to the sequence of operations performed by the model to compute/infer the value of *TS* from the input values of the parameters (for example, if the model is the MLP model, *f* is defined by weights and activations functions of the MLP). Practically, this means that *f* is computed by calling the model and applying it to each instance of parameter values seen/tested during the optimization and by extracting the value of *TS* from the output of the model. *TS* is used as an example here, but any other one of the properties or any subset of the properties could be computed similarly and thus define similarly an objective function.

Additionally or alternatively, the one or more objective functions may comprise or consist in one or more functions each representing a respective maximization or minimization relationship between at least one property and at least one parameter. Formulating such function(s) may comprise performing a statistical analysis of the results provided by the model (*i.e*. values of the at least one property) and infer from that analysis that the at least one property is affected negatively or positively (*e.g*. maximized or minimized) by a certain evolution of at least some of the parameters. For example, in the automotive driveshaft case, the statistical analysis may comprise using the model to understand how feed rate and cutting speed affect tensile strength and surface finish, and may lead to the conclusion that: Increased feed rate negatively impacts surface finish but has a negligible effect on tensile strength up to a threshold, and optimal cutting speed exists where tensile strength is maximized due to favorable microstructural changes. An objective function may then be formulated accordingly.

As known *per se,* the optimization problem may comprise, although it is not necessarily the case, one or more constraints. Formulating the optimization problem may further comprise formulating one or more constraints for the optimization problem based on the model and/or on its training dataset, *e.g.* by performing an analysis (*e.g*. a statistical analysis and/or a data observation analysis) of the output of the model and/or of its training dataset, for example to infer unacceptable values of at least some parameters, to exclude from the possible values taken by the parameters during the optimization.

Formulating one or more constraints for the optimization problem based on the model and/or its training dataset may comprise one or more of:
- determining one or more ranges of parameter values beyond which the model provides unreliable or unacceptable predictions;
- determining a boundary that the optimization must not cross based on outcomes of the model labeled unacceptable or acceptable;
- determining one or more thresholds of property values beyond which the model provides unreliable or unacceptable predictions; and/or
- determining a data region enclosing typical parameter values and outside of which parameters values are considered unacceptable.

Determining one or more ranges of parameter values beyond which the model provides unreliable or unacceptable predictions may comprise determining, for each parameter which is a free variable of the optimization, a range of values of the parameter to which all example values of the parameter in the training belong, and, in the optimization problem, formulating the constraint that this parameter must have its values within that range only. For example, If the training dataset only includes cutting speeds between 100 and 200 m/min, extrapolating beyond that range may be unreliable. The optimization may thus comprise the constraint 100 ≤ *x_{speed}* ≤ 200 for the cutting speed parameter *x_{speed}.* The determination of one or more ranges of parameter values may be done for any one of the models listed above (linear regression, random forest, SVM, CART, GBM, MLP), it is not specific to a particular model.

Determining a boundary that the optimization must not cross based on outcomes of the model labeled unacceptable or acceptable. This may be done when the model is a model with a classification mode/setting (and the model is used and learnt in that mode), and thus for the case where the model output consists in label values of the one or more properties within a discrete label set, as previously discussed. This determination of a boundary thus applies to the case where the model is SVM, random forest, GMB, or CART. Determining the boundary may comprise defining a set of output labels considered acceptable, and a set of output labels considered unacceptable. Alternatively, the model may directly output only two possible labels, acceptable and non-acceptable (*e.g.* acceptable corrosion resistance rating, or acceptable tensile strength). This classification, acceptable vs non-acceptable forms the boundary, and the constraint in the optimization problem is that the property or properties to optimize must belong to the acceptable side of the boundary.

Determining one or more thresholds of property values beyond which the model provides unreliable or unacceptable predictions may comprise performing an analysis of the error made by the model, by any procedure known in machine-learning, and determining from that analysis that the model performance is only acceptable (*e.g.* the error made by the model between calculated output and ground truth remains below an predefined maximal error value) when one or more parameter each has its value above or below a respective threshold. In this case, the corresponding constraint in the optimization problem is constraining each such parameter to have its value below or above, where appropriate, the respective threshold. For example, the data may show that performance is only acceptable above a certain tensile strength (e.g., *TS* ≥ 750 MPa), in which case the optimization problem with the objective tensile strength function *TS = f*(*parameters*) may comprise the constraint, *f*(*x*) ≥ 750. This determination of one or more thresholds may be done for any one of the models listed above (linear regression, random forest, SVM, CART, GBM, MLP), it is not specific to a particular model.

Determining a data region enclosing typical parameter values and outside of which parameter values are considered unacceptable. This determination of such data region may be applied only to the case where the model is SVM and may comprise using the support vectors to define the region or range which encloses acceptable/typical values of the parameters. The corresponding constraint is forbidding the values of the parameters in the optimization to be outside that region/range.

In implementations, if the model is the linear regression model, formulating the constraints may comprise the determination of parameter values ranges based on the training dataset as discussed above, and/or the determination of threshold(s) as discussed above, for example by determining that the linear fit only holds within an observed data range (e.g., cutting speeds from 100 to 200 m/min). Going beyond those ranges or thresholds may significantly increase prediction error, implying a natural constraint to forbid values beyond those ranges or thresholds.

In implementations, if the model is a random forest, the formulation of the constraints may comprise the previously discussed determination of a boundary not to be crossed, as decision trees naturally partition the feature space into regions. By analyzing the leaf nodes that correspond to acceptable outputs, the method may derive feasible parameter sub-ranges and formulate constraints accordingly.

In implementations, if the model is the SVM model, the formulation of the constraints may comprise: 1) In a classification setting (acceptable vs. unacceptable properties), the SVM boundary becomes a constraint: feasible points satisfy d(x) ≥ 0 (distance from the separating hyperplane), and 2) In a regression setting, the support vectors define the range of data coverage, suggesting parameter limits (thresholds or ranges as discussed above) beyond which predictions may be unreliable.

In implementations, if the model is the CART model, the formulation of the constraints may comprise determining that each path in the tree corresponds to a set of parameter thresholds. Regions of high performance indicate feasible domains; below/above certain splits, the model may predict failure or inadequate properties, revealing implicit constraints.

In implementations, if the model is the GBM model (Similar to Random Forests, GBMs produce an ensemble of trees), the formulation of the constraints may comprise examining which tree-terminal regions are associated with acceptable vs. unacceptable outcomes, so as to define feasible or safe zones for each parameter combination.

In implementations, if the model is the MLP model, the formulation of the constraints may comprise, once the model is trained, using sensitivity analysis or boundary mapping to see how output properties change with parameter variations. This reveals intervals/ranges (e.g., feed rate between 0.2 and 0.5 mm/rev) that keep the predicted property within a desired target.

Additionally or alternatively to formulating constraints based on the model and/or the training dataset, the formulation of the optimization problem may comprise formulating one or more other constraints independent from the model or the training data, *e.g*. constraints for example related to specific manufacturing considerations (*e.g*. using a specific manufacturing machine which, regardless of the training data, has a maximal and a minimal cutting speed and/or feed rate) and/or to specific design settings (*e.g*. total allow composition percentages sum to 100%) and/or to a specific desired constraint on the property to optimize (*e.g*. tensile strength required to be above a certain threshold for a certain use of the product).

The method may further comprise solving the optimization problem. The solving of the optimization problem will be further discussed hereinbelow.

It is also provided computer-implemented method for optimizing one or more properties of a product to be manufactured. This method may be referred to as "the interactive optimization method". The interactive optimization method comprises providing, to a user, an optimization problem for optimizing the one or more properties of the product. The optimization problem being based on a pool of one or more known relationships. Each relationship is between one or more properties of the product and manufacturing and/or design parameters of the product. The interactive optimization method comprises by the user, providing a text request related to the optimization problem. The request is one of: requesting a test of modification of one or more manufacturing and/or design parameters of the product or requesting an explanation of a result of the optimization problem. The interactive optimization method also comprises, automatically: if the request is requesting an explanation of a result of the optimization problem, by a first trained LLM-based module, providing the explanation, and if the request is requesting a test of modification of one or more manufacturing and/or design parameters of the product, by a second trained LLM-based module, providing a result of the optimization problem based on the modification and on the one or more relationships.

In the interactive optimization method, the product to be manufactured, the properties, and the parameters may be the same as discussed above for the learning method and the method of use, *i.e*. the description provided herein for the product, parameters and properties for the learning method and the method of use also applies to the product, properties and parameters involved in the interactive optimization method.

In the interactive optimization method, the optimization problem may be the optimization problem of the method of use discussed herein. This problem is based on a pool of one or more known relationships between the properties and parameters of the product, the optimization problem in the method of use being based on the relationship(s) inferred by the machine-learnt model. In other words, in this case, the pool of one or more known relationships is the set of one or more relationships learnt/inferred by the machine-learnt model discussed above. In such a case, the interactive optimization method simply forms further steps of the method of use, *i.e.* the method of use further comprises the steps of:
- providing the optimization problem (*i.e*. the one of the method of use) to a user, *i.e*. the step of providing an optimization problem in the interactive optimization method consists in providing the optimization problem of the method of use to a user when the interactive optimization method is part of the method of use;
- providing the text request related to the optimization problem, the request being one of:
   ∘ requesting a test of modification of one or more manufacturing and/or design parameters of the product; or
   ∘ requesting an explanation of a result of the optimization problem; and
- automatically:
   ∘ if the request is requesting an explanation of a result of the optimization problem, by a first trained LLM-based module, providing the explanation; and
   ∘ if the request is requesting a test of modification of one or more manufacturing and/or design parameters of the product, by a second trained LLM-based module, providing a result of the optimization problem based on the modification and on the one or more relationships.

Alternatively, in the interactive optimization method, the optimization problem may be any known optimization problem of optimization of one or more of the properties of the product based on the parameters, or a subset of them, as free variables. This problem is based on an existing pool of relationships between the properties and parameters of the product, *e.g.* known relationships, *e.g.* explicit relationships known from manufacturing and/or physics of the product.

Providing the optimization problem to the user may essentially consist in displaying to the user the optimization problem, or data relevant to that problem. For example, this may comprise displaying to the user, the objective function(s) (which relate(s) to optimizing at least one of the properties) to optimize and minimize, the parameters which are free variables of the optimization, the optimization constraint(s) (on the parameter(s) and/or on the objective function(s)), either separately or in a same displayed formulation of the problem. The display may be performed on a graphical user interface (GUI) of the system having a design adapted for that display, and for the subsequent interactions between the user ang the GUI discussed herein.

The providing of the text request is performed by a user, by user interaction with a graphical user interface of the system on which the interactive optimization method is performed. The graphical user interface may be a web interface or an interface of a local/standalone software. Providing the text request may comprise graphically entering the text, *e.g.* using a keyboard or the like. Alternatively, voice dictation solutions with text recognition may be used to enter the text request via speaking. The text request is a sentence (although possibly not grammatically perfect) or several sentences, related to the optimization problem, and relates to one of: 1) requesting a test of modification of one or more manufacturing and/or design parameters of the product, or 2) requesting an explanation of the result of the optimization problem. Examples of text requests are provided hereinbelow. The method may comprise imposing a limitation of the number of words or characters in the request and/or denying requests identified not to correspond to 1) or 2) above.

The interactive optimization method may comprise, upon receipt by the system of the text request, automatically:
- processing the text request by applying text-cleaning to the text request and breaking the text request into structured segments. This may be done by a *MessageIngestor* microservice, which applies a text-cleaning process (for noise removal), and breaks the requests into structures segments (sentences, keywords, and domain terms);
- applying a LLM model to the processed text request to determine whether the request is requesting a test of modification of one or more manufacturing and/or design parameters of the product, or requesting an explanation of a result of the optimization problem. This may be done by a domain-specific foundation model (for example a fine-tuned version of GPT-4, or LLaMA), which may be called *DomainLLM,* to which the processed text is fed as input. *DomainLLM* identifies the user's intent (*e.g*. "test parameter changes", "add constraints", "explanation request") and extracts the relevant details (parameter names, numeric values, thresholds). If it is determined that an explanation is requested, the method determines that the intent is "EXPLAIN_SOLUTION", and may redirect the user query to a specialized ExplainabilityModule. This module may performs the providing of the explanation by: accessing feature-importance data, performing sensitivity analysis, providing domain-based reasoning (e.g., "Increasing the carbon content influences hardness and thus tensile strength...");
- converting the processed text request into a JSON file, the further steps of the method using the JSON file. The conversion into a JSON file may also be done by *DomainLLM,* which may be configured to file a predefined JSON file template comprising the features: intent, parameters (*i.e.* concerned by the request), constraints (*i.e.* identified in the request) For example, if the user requests a test of parameter changes where the cutting speed parameter is to be increased by 15% without changing material composition and without adding further constraints, the JSON file may be of the type:
   ∘ {
   ∘ *"intent": "TEST_PARAMETERS",*
   ∘ *"parameters": {*
      ▪ *"cuttingSpeed": "+15%",*
      ▪ *"materialComposition": null*
   ∘ *}*,
   ∘ *"constraints": []*
   ∘ }

During application of *DomainLLM,* the method may use knowledge-graph lookups to resolve synonyms or ambiguous references. For example, if the user says "I want to machine this part faster," the system knows to interpret "machine faster" as an increase in "cuttingSpeed." The application of *DomainLLM* may also comprise leveraging vector embeddings in *DomainLLM* to detect relevant domain terms even if the user input is vague or partially specified.

As said above the further steps of the method (*i.e.* the next steps) use the JSON file instead of the text request. For that the method may comprise placing the JSON file in an internal message bus (*e.g.* Kafka). The method may comprise, by a centralized *WorkflowEngine* service, listening to the message bus and dispatching the JSON to the appropriate sub-process based on the *intent* field. In fact, further to the listening of the message, the method may further comprise, by the *WorkflowEngine,* checking, in the JSON file, if the intent is a test of parameter modification (*e.g.* if *intent* is *TEST_PARAMETERS*)*.* If not, the JSON will be checked to see whether the request consists in requesting a result explanation. If yes, the method may proceed to providing a result of the optimization based on the modification and on the one or more relationships. This logic may be housed in a rule-based microservice named *IntentRouter.* It continuously listens to new JSON messages and routes them according to a state machine definition (stored in a BPMN or YAML file). At this step the method may implement real-time monitoring by storing each routing decision in a time-series database, enabling advanced analytics on user behavior (e.g., how often do they test parameters vs. request explanations). The method may comprise performing such user behavior analysis, *e.g*. as background post processing each time the user uses the method.

Providing the result of the optimization problem based on the modification and on the one or more relationships may comprise determining whether a relationship exists in the pool between the modified one or more parameters and the one or more properties of the product. This may comprise, for the property/properties involved in the optimization problem (*i.e.* to be optimized), checking, for each parameter concerned by the user's request, a registry of the parameters and determining from the registry if the parameter is tagged as having an explicit relationship with the property/properties. The model registry may be a NoSQL store with documents of the type (for each parameter):

```
    {
     "parameterName": "cuttingSpeed",
     "modelVersion": "MLP_v1.3",
     "isExplicit": true
    }
```

In the above example, "modelVersion" refers to the model from which the relationship(s) was/were learnt, according to the learning method. If the pool of relationships does not stem from the learning method, this line "modelVersion" may be absent. If all user parameters are flagged as isExplicit: true, then proceeds with performing the test requested by the user. The method may comprise applying a microservice ModelCatalogAPI to check coverage, *e.g.* to check that all parameters of the user request are flagged as isExplicit: true. It may return "all covered" or "uncovered parameters present". At this stage the method may use a knowledge graph of domain parameters that can automatically propose approximate coverage if an exact mapping is missing (e.g., "feed rate" might still be relevant to "surfaceFinishModel").

If it is determined that a relationship exists in the pool between the modified one or more parameters and the one or more properties of the product, providing a result of the optimization problem based on the modification and on the one or more relationships may further comprise calculating the result of the optimization problem with the modified one or more parameters. In other words, the optimization problem is based on an existing relationship (or more) of the pool between the property/properties to optimize and the one or more parameters modified by the user, *i.e*. the optimization problem consists in optimizing the property/properties with the one or more parameters being, or at least being part of, the free variables of the optimization, the relationship(s) allowing computation of the property/properties based on the these/this parameter(s). The method may thus directly solve the optimization problem, by instantiating the relationship(s) and using it/them to compute values of the property/properties based on value of the parameters during the optimization. Further details on the optimization problems discussed herein and on how to solve them are provided hereinbelow.

If the relationship(s) is/are inferred by the machine-learnt model of the learning method, *e.g*. as described above for the method of use, instantiating the relationship(s) may comprise fetching the model and instantiating it in memory, as the relationship(s) is/are computed by application of the model. For example, the method may apply a *PredictiveModule* service which fetches the trained model (e.g., MLP_v1.3.pkl) from an artifact store (such as S3, MinlO), and then instantiates the model in memory, ensuring the correct version that contains the relevant relationships (tensileStrength, cost, feedRate, etc.).

At this point of the method of use, prior to actually solving the optimization problem, the method may provide the user with a choice (*e.g*. through the graphical user interface) between a full re-optimization with the modified values of the one or more parameters (*i.e*. the optimization problem is to be modified from scratch with the modified values of the parameter(s), *e.g.* for example by increasing cuttingSpeed by 15%), and a "what if" quick result. Alternatively, this choice between full re-optimization and quick "what if" result may be performed automatically by the method based on the content of the user request. Prior to discussing this, the modification of the one or more parameters should be further explained.

The modification of the one or more parameters consists in, for each parameter of the one or more parameters, modifying the parameter itself (*i.e*. not just a particular value thereof). Modifying the parameter means applying a function *f* to the parameter, such that, if *p* is the parameter, the modification consists in replacing *p* by *f*(*p*) in the optimization problem. Of course, this modification does not change the relationship between the properties to optimize and *p*, and does not change the formulation of the optimization problem either. In practice, the modification changes the range of values taken by *p* when fed as input to the relationship(s) (where appropriate, to the learnt model). Indeed, instead of seeing the ranges of values taken by *p*, the relationship(s)/model sees the ranges of values taken by *f*(*p*)*. f* may be any function defined by the user (through its request), for example a linear function of the type *f*(*p*) *= ap + b* (*e.g.* if the user requests to increase *p* by 15%, *a* = 0 and *b* = 15%).

The full re-optimization scenario recomputes a solution to the optimization problem but with each modified parameter p being replaced by a respective user-defined function *f*(*p*)*.* The method may for that call the appropriate solver (*e.g.* CPLEX, Gurobi, or similar solver, *e.g.* via Python API), *e.g.* using a dedicated *OptimizationOrchestrator* module to which the updated parameters are fed. The quick what if result simply computes a new value of the property/properties to be optimized based on, for each modified parameter *p* of which previously calculated optimal value *pₒₚₜ* is requested to be changed into *f*(*pₒₚₜ*), the new value *f*(*pₒₚₜ*)*.* For this quick "what-if" scenario (forward inference only), the method directly feeds the updated parameter vector into the relationship (*e.g.* model) to predict new performance metrics (e.g., cost, tensile strength). As previously explained, the choice between full re-optimization and quick "what if" result may be automatically performed by the method based on the content of the user request or may be performed by the user.

Calculating the result of the optimization problem with the modified parameter(s) may further comprise generating the result, for display to the user. For that, once the solver or inference run completes, the method may return a JSON file of the result, for example of the type:

```
    {
     "updatedParameters": {
      "cuttingSpeed": 172.5,
      "feedRate": 0.28
     },
     "predictedProperties": {
      "tensileStrength": 770,
      "productionCost": 430
     }
    }
```

The method may comprise sending this output back to the *WorkflowEngine,* which merges it into the user session data. In the calculation of the result of the optimization problem with the modified parameter(s), the method may use a Neural AutoConstraint module that flags any updated parameters that violate domain rules (e.g., maximum recommended feed rate for a given material hardness) before passing them to the solver.

If it is determined that a relationship does not exist in the pool between the modified one or more parameters and the one or more properties of the product, providing a result of the optimization problem based on the modification and on the one or more relationships may further comprise determining, based on available learning data, whether a new relationship between the one or more properties and the modified one or more parameters can be learnt by a machine-learning model. It is indeed to be understood that the pool of relationships consists of one or more relationships each between at least one property concerned by the optimization problem (*i.e.* to be optimized) and manufacturing and/or design parameters of the product, but these parameters may not comprise the one or more parameters concerned by the modification requested by the user, or at least may not comprise all of them. In other words, the user may ask for a modification of a parameter which currently is not related to the property/properties to optimize by at least one relationship of the pool. If this is the case, the method thus proceeds to determine whether a new relationship between the property/properties to optimized and the modified parameter(s) can be learnt.

For that, the method may check the available data concerning the properties and the parameters of the product. The method may for that check a library or database of recorded training examples, *e.g.* of the same type as those discussed for the learning method (*i.e*. each training example consists of product parameters values and corresponding ground truth properties values). For that, the method may use a *DataManager* microservice (using a SQL or NoSQL backend for example) which looks for training example records containing the new parameter(s) in question. The method may comprise assessing whether the training example comprises a sufficient number of example (*e.g.* a number larger than a predefined threshold, *e.g.* at least one 50 training examples) for the learning of the new relationship to be sufficient, and if yes, proceeds to training the model. Alternatively, the method may perform coverage checks (*e.g.* a distribution-based check) of the training examples to determine that the new relationship can be learnt by training a model to infer that relationship, and if yes, proceeds to the training. The *DataManager* may return "enoughData: true" if the training data is sufficient. If training data is partially missing, *i.e.* there are relevant training examples (*i.e.* related to the parameter(s) to modify) but not in sufficient number and/or variability, the method may automatically, before *DataManager* returns true or false for the field "enoughData", generate synthetic samples using domain-aware generative methods (e.g., a small physics-based simulator or a specialized generative model) to fill data gaps.

If it is determined that a new relationship between the one or more properties and the modified one or more parameters can be machine-learning model, providing a result of the optimization problem based on the modification and on the one or more relationships may then further comprise learning the new relationship by training the machine-learning model.

If it is determined that a new relationship between the one or more properties and the modified one or more parameters cannot be machine-learnt, providing a result of the optimization problem based on the modification and on the one or more relationships may further comprise determining whether additional learning data is required to learn the new relationship, and if yes and if the additional learning data can be obtained, learning the new relationship based on the additional learning data by training the machine-learning model based on the additional learning data. Determining whether additional learning data is required may be performed by the DataManager as discussed above, which upon checking the training example recors, returns "enoughData: false". In this case, the method may comprise prompting the user (or another external source), for example by displaying a message to the user on the GUI, to upload new training examples, *e.g*. new experiment logs, test data, or any relevant datasets that include the previously unknown parameter. This triggers an async process where the user can upload a CSV, JSON, or Excel file. During that process, the method may comprise providing (*e.g.* by displaying messages on the GUI) suggestions to the user, for example of the type "Try feed rate variations in the range 0.1-0.3 mm/rev") to collect the most informative data". Then, the method may apply a *DataIngestor* which verifies the format and cleanliness of the new file(s). If valid, it merges with the existing dataset and triggers a background job to move forward with the training of the model. Again if the user provides training examples but not in sufficient quantity, the method may perform automatic data augmentation as discussed above. If no new data is provided, the method may terminate the interactive optimization process, *e.g.* by outputting (displaying) a JSON status:

```
    {
     "status": "INSUFFICIENT_DATA",
     "message": "Cannot learn new parameter relationship without additional
     data."
    }
```

Thus, if sufficient training data is already available in the training example records, or if the user completes sufficiently the training data, the method learns the new relationship by training the machine-learning model based on the new training data, *i.e*. the training data concerning the parameters to modify, whether already available or provided by the user. The method may for that train the model from scratch based on the new training data, *e.g*. by applying the learning method. Alternatively, if the pool of relationships already stems from the learning method, *i.e*. they have been inferred by a trained model according to the learning method, the method may simply update that model (*i.e*. re-train it or fine-tune it using the new training data). The method may in particular leverage incremental retraining or transfer learning if the existing model architecture can be adapted to new data with minimal overhead. For that, the DataManager may merge the new data into the main training dataset of the already trained model. In that merging, a pipeline of transformations (scaling, encoding, feature engineering) may be automatically applied. A ModelTrainer microservice may then trigger a job that runs the model (MLP, RandomForest, etc., as described above for the learning method) with hyperparameter tuning, and computes performance metrics (RMSE, R², etc.) against a validation set. The machine-learnt model may then be stored in the artefact store, and applied to provide the new relationships. A *ModelCatalogAPI* may be updated as in the following example:

```
    {
     "modelName": "MLP_v1.4",
     "features": ["cuttingSpeed", "feedRate", "lubricantType"],
     "performance": {
      "R2": 0.88
     }
    }
```

Once the new relationship is learnt (i.e. inferred by the learnt model), providing a result of the optimization problem based on the modification and on the one or more relationships may further comprise updating the optimization problem based on the new relationship, and then solving the updated optimization problem based on the modified one or more parameters. Updating the optimization problem may comprise using the new relationship and/or the learnt model to formulate the objective function(s) of the updated optimization problem and/or to formulate one or more constraint(s) of the updated optimization problem. This may be done as described above for the method of use. This update may be performed by the *OptimizationOrchestrator.* The solving of the optimization problem may be performed as further discussed hereinbelow, using a solver to solve the problem with its updated objective(s) and/or constraint(s) (a job being for example spawned in the solver environment, CPLEX, Gurobi or the like). The solver may return a Pareto set if there are multiple objectives (e.g., cost vs. tensile strength vs. production time). If the solver fails to find a feasible solution under tight constraints, the method may use a built-in negotiation mechanism that proposes small constraint relaxations (e.g., "What if we allow cost to go up by 5%?").

Providing the result of the optimization problem may comprise generating a JSON file describing the result, and outputting the result textually based on the JSON file, using a LLM model. The JSON file may be of the type:

```
    {
     "updatedParameters": {...},
     "predictedProperties": {...}
    }
    
```

This JSON may be logged in a "results" collection for future reference.

Outputting the result textually may comprise, by a **ResultAssembler,** merging the solver outputs with the user session data (original parameters, constraints, any notes). The LLM model, which may be a **DomainLLM,** is used at this tage, but in explanation mode, to produce a concise textual summary (e.g., "By selecting Lubricant C and adjusting feed rate to 0.32, you gain a 6% improvement in fatigue resistance"). The final response may then be posted back to the front-end in the JSON:

```
    {
     "responseType": "OPTIMIZATION_RESULT",
     "optimalParameters": {...},
     "predictedProperties": {...},
     "summary": "By selecting Lubricant C..."
    }
```

Then, the method may render this data visually and textually. The entire conversation, along with the final result, may be stored in an audit log for traceability. The method may further automatically generate charts or 3D simulation previews. If the user changes key parameters, these views update in near-real-time to reflect new predictions.

The alternative when an explanation is requested by the user and provided is now further discussed. As previously discussed, providing the explanation may be performed by a specialized **ExplainabilityModule.**

Providing the explanation may comprise obtaining the solution or solutions (*e.g.* Pareto frontier points) of the optimization problem, wherein each solution is associated with corresponding values of one or more parameters of one or more objective functions, and of one or more constraints. The method may for that retrieve from a (*e.g.* remote) memory or database already computed solution of the problem, each already computed solutions being associated to the optimal values of the objective functions (e.g., predicted cost = €430, tensile strength = 770 MPa), parameters (e.g., cutting speed = 180 m/min, carbon content = 0.8 %, feed_rate = 0.3 mm/rev, etc.) and constraints (e.g., "feed_rate ≤ 0.5 mm/rev" satisfied) computed for that solution.

Providing the explanation may then comprise analyzing the solution or solutions, which may comprise:
- for a single solution, computing importance indicators to describe which parameters most strongly influence each objective function, using a local sensitivity test (*e.g.* vary a parameter by a certain percentage (*e.g.* ±10% to gauge changes in cost, tensile strength, etc.) and/or a SHAP-value approach (*e.g.* if the machine-learning model supports it; for example it is the case for MLP and GBM);
- for a set of Pareto solutions, comparing them to determine trade-offs (*e.g*. comparing the solutions to determine trade-offs of the type "to gain 2% tensile strength, you sacrifice 5% in cost");

Providing the explanation may then comprise applying a LLM model to said corresponding values and to the results of the analyzing, to output a text description of the result of the optimization. The method may for that feed the LLM with:
- The context (objectives, constraints, relevant parameters).
- The post-hoc analysis results (importance indicators, parameter variations).
- Desired style/technical depth (brief or detailed explanations).

The LLM may then produce a statement such as: *"Increasing the cutting speed by 15 % reduces production cost by ~4 % due to shorter machining time. However, tensile strength drops by ~1.3 % because of additional thermal stress, which may slightly affect the part's performance. The model also adjusted feed rate to minimize this impact on tensile strength."*

The method further comprises, by the user, providing another text request requesting further explanation of the result or another text request requesting explanation of a result of the optimization with the modified one or more parameters. For example, in the alternative where the user request further explanation, the method may deliver a contextualized response via a chat interface (or other UI), and the user can then ask clarifying questions:
▪ *"Why did hardness decrease when I lowered the feed rate?"*
▪ *"What if I increase the carbon content further?"*
For each inquiry, the method may either triggers a quick local analysis (if a local interpretable model is available) or runs a "what-if" scenario in the solver, then generates a new explanation.

As outlined above, implementations of the interactive optimization method provide the following advantages:
∘ Domain-Aware Foundation Models: the method incorporates large language models trained (or specialized) on mechanical-engineering text corpora to handle advanced user queries seamlessly.
∘ Knowledge Graph Integration: A background knowledge graph helps interpret synonyms, suggest relevant constraints, and expand partial user inputs into structured parameter references.
∘ Automatic Data Augmentation: When insufficient data is available for a new parameter, the method optionally invokes a domain-level simulation or generative model to synthesize realistic samples.
∘ Continuous & Transfer Learning: Instead of complete retraining, the method allows incremental updates to the existing model, reducing downtime and computational overhead.
∘ Adaptive Solver Mechanism: If the solver encounters infeasible constraints, the system proactively negotiates constraint relaxation or proposes alternative trade-offs (e.g., cost vs. durability).
∘ Real-Time Dashboard & Visualization: Users see immediate feedback in the UI through dynamically generated plots, allowing them to track how parameter tweaks shift the optimization outcome.

The ExplainabilityModule is now further discussed;
∘ Role and Positioning: Once the optimization model is trained (during the initialization phase) and integrated into the Al agent (interactive phase), the method introduces an explainability module that provides justifications and clarifications on:
   Trade-offs between different objectives (e.g., tensile strength vs. cost vs. production rate).
   Reasons behind certain decisions (e.g., why a specific cutting speed or material composition is chosen).
   Impact of parameter modifications (e.g., "What happens if I increase the cutting speed?").
   This module operates at the same level as the "Provide Results and Explanations to Designer" stage: it acts on the solutions generated by the optimizer and/or ML models, re-formulating or clarifying the outcomes for the designer.
∘ Inspirations and General Principles: Within Explainable Al (XAI) and multi-objective contexts, various academic approaches clarify how to translate a model's internal mechanisms or discovered trade-offs into human-readable language. The module draws on:
   Post-hoc methods (e.g., SHAP, LIME) to highlight the parameters (manufacturing settings) that most influence each objective (cost, tensile strength, etc.).
   Rule-generation approaches (e.g., DRSA, XIMEA-DRSA, R-XIMO) to produce "if... then..." statements describing key parameter thresholds.
   Conversational LLM-based approaches (e.g., GPT-4, LLaMa, Mistral), which can transform internal analytical insights into accessible text for non-expert users.
   The module combines model-agnostic methods (interpretations that do not strictly depend on a single ML model type) with conversational generation (to deliver interactive, dialogue-based explanations).

Any optimization problem herein (*i.e*. in the learning method, the method of use, and the interactive optimization method) may be a single objective problem, i.e. it concerns only one of the properties, to be either maximized or minimized. An example is maximizing tensile strength *TS = f*(*parameters*)*.* The optimization problem may alternatively be multi-objective, *i.e*. it concerns several properties, each to be optimized. An example is maximizing tensile strength while minimizing production cost: $\left\{\begin{matrix}max TS = {f}_{1} \left(parameters\right) \\ min Cost = {f}_{2} \left(parameters\right)\end{matrix}\right.$

The parameters are the decision variables, or free variables, of the optimization.

Any of the methods disclosed herein may at one point comprise a set of solving an optimization problem. The feature "solving the optimization problem" is now discussed, and this discussion applied to any optimization problem and solving of this problem in any of the proposed method. Once the problem is formulated, solving the optimization problem may be done as known *per se* in the field of optimization.

Solving the optimization problem may use exact methods to solve the optimization problem, utilizing for example the CPLEX solver. Exact methods are suitable for problems where the objective functions and constraints are continuous and differentiable, providing precise and optimal solutions. The CPLEX Solver handles linear programming (LP), mixed-integer programming (MIP), and quadratic programming (QP) problems. The method may thus leverage CPLEX's powerful algorithms to efficiently find optimal solutions.

In the case where the optimization problem is multi-objective optimization, solving the optimization problem may use non-preference-based methods to solve the problem without requiring predefined weightings of the objectives. Examples of such methods which can be used by the methods include:
i. Weighted Sum Method:
   ∘ Approach: Combines multiple objective functions into a single scalar objective function by assigning weights to each objective.
   ∘ Formulation: Minimize *Z* = *w*₁*f*₁(*x*) + *w*₂*f*₂(*x*) *+* ... *+ wₙfₙ*(*x*) where *wᵢ* are the weights, and *fᵢ*(*x*) are the objective functions.
   ∘ Usage: By varying the weights, one can generate different Pareto-optimal solutions.
ii. Lexicographic Optimization:
   ∘ Approach: Objectives are ranked in order of importance.
   ∘ Process:
      ▪ Optimize the most important objective first.
      ▪ Subsequent objectives are optimized in order, subject to the constraint that previous objectives' optimal values are maintained.
   ∘ Application: Ensures that higher-priority objectives are not compromised while optimizing lower-priority ones.
iii. Epsilon-Constraint Method:
   ∘ Approach: Optimize one primary objective while treating other objectives as constraints with specified acceptable levels (epsilon values).
   ∘ Formulation:
      min *f*₁(*x*)
      *Subjecto to fᵢ*(*x*) ≤ *εᵢ, i* = 2, ...,*n*
   ∘ Usage: Allows for the generation of Pareto-optimal solutions by systematically varying the epsilon values.

### Example Optimization Process for automotive driveshaft:

- Objective: Maximize tensile strength and fatigue resistance while minimizing cost.
- Constraints:
   ∘ Weight ≤ 15 kg
   ∘ Production time ≤ 5 hours per unit
- Method: Use the weighted sum method with CPLEX to solve the optimization problem.

### Results

- Optimal Parameters:
   ∘ Material composition: 0.8% Carbon, 1.2% Chromium
   ∘ Heat treatment: Tempering at 600°C for 2 hours
   ∘ Cutting speed: 150 m/min
   ∘ Feed rate: 0.3 mm/rev
- Predicted Properties:
   ∘ Tensile strength: 780 MPa
   ∘ Fatigue resistance: 1.8×1061.8 \times 10^61.8×106 cycles
   ∘ Production cost: €450
   ∘ Weight: 14.5 kg

The advantages of using exact methods with CPLEX are:
- Precision: Exact methods provide precise optimal solutions rather than approximations.
- Efficiency: CPLEX is optimized for solving large-scale optimization problems efficiently.
- Robustness: Capable of handling a wide range of problem types, including linear and non-linear, continuous and discrete variables.
- Flexibility: Allows for easy incorporation of additional constraints and objectives.

**An example of providing an explanation to a multi-objective solution is now discussed:**
- Objectives: maximize tensile strength, minimize cost.
- Constraint: cutting speed between [100, 200 m/min].
- Optimizer result: (speed = 160 m/min, carbon = 0.7 %, feed_rate = 0.3 mm/rev), with predicted cost of €420 and tensile strength of 780 MPa.

The explainability module conducts a sensitivity analysis by changing cutting speed ±10 m/min. It finds tensile strength varies ±2 % while cost varies ±3 %, concluding that cutting speed strongly correlates with cost and also affects tensile strength.

The LLM then generates a text such as:
"This solution recommends a cutting speed of 160 m/min because it balances shorter machining times (thus moderating cost) with maintaining a microstructure that achieves ^{~}780 MPa. Below 150 m/min, the gain in tensile strength is insufficient to justify the longer machining time."

**An example of providing an explanation including comparing two Pareto solutions is now discussed:**
- Solution A: cost=€400, tensile strength=750 MPa
- Solution B: cost=€450, tensile strength=790 MPa

The module provides a comparison table and an LLM-created explanation, such as:
"By selecting solution B, you gain +40 MPa in tensile strength (+5.3 %) at an additional cost of €50 (+12.5 %). For critical components-such as a driveshaft-this extra expense may be justified due to higher long-term reliability."

**Possible extensions and customization of the providing of an explanation.**
- Compatibility with Various Optimization Methods: The module can handle data from exact solvers (CPLEX) or alternative algorithms (NSGA-II, gradient boosting, etc.), as long as objectives and constraints are clearly defined.
- Continuous Learning: If the user frequently asks questions like "Does reducing lubrication still improve fatigue resistance?" the module can refine its "explanation patterns" or proactively highlight potential constraints.
- Interactive Visualization: Beyond text, the agent can generate sensitivity charts or Pareto plots, which the LLM can then describe or comment on in real time.
- Expected Benefits:
   ∘ Transparency and Trust: Engineers better understand why the system recommends certain parameter ranges (e.g., feed rate, cutting speed, etc.).
   ∘ Easier Adoption: User-friendly explanations encourage users to experiment with solutions and iterate on new settings.
   ∘ Faster Iteration: The explainability module helps users quickly rule out solutions considered "too expensive" or "too risky," guiding them toward more suitable trade-offs.

Advantages of the interactive optimization method are now further discussed.

First, the interactive optimization method provides for an adaptive optimization framework, providing flexibility allows for the rapid incorporation of new constraints and objectives without the need for complete model retraining, enhancing responsiveness to changing requirements. Constructing a flexible optimization problem based on existing relationships (stemming for example from learnt models as discussed hereinafter) allows to maximize component performance across multiple properties by adjusting design and manufacturing parameters. This framework adapts to new data and constraints dynamically, without the need for extensive retraining.

This method also allows implementation of a user-centric AI agent interface, as natural language interaction lowers the barrier to entry, enabling users to engage with complex optimization tasks intuitively. This accessibility promotes broader adoption across different user groups within the manufacturing sector. Incorporating an AI agent powered by a large language model (LLM) to facilitate seamless interaction with designers. This agent allows users to input queries in natural language, test hypothetical scenarios, and add new constraints that may not be explicitly linked to decision variables. For example, a user can ask, "If I change the material type to aluminum, how will it affect the tensile strength and production cost?"

This method also enables continuous improvement: the system learns from each user interaction and new data input, continuously refining its models and predictions. This leads to progressively better performance and more reliable optimization results.

The learning method, the method of use, and the interactive optimization method may be integrated into a same computer-implemented process. Alternatively, each method may be performed independently, or yet the learning method and the method of use may be performed in a same computer-implemented process without the interactive optimization method. Implementations of a process integrating the three methods is now discussed.

This process provides two-phased approach to enhancing mechanical manufacturing processes through advanced technology. Initially, in an initial phase of the process (also referred to as "initialization" or "system initialization"), the learning method and the method of use are performed. This establishes a robust system that identifies and models implicit relationships between component (product) properties and manufacturing parameters using sophisticated machine learning techniques as discussed above. After these relationships are understood and defined, they are used to tackle complex optimization problems that fine-tune manufacturing parameters for optimal component design as discussed above. Following this, the process transitions into an interactive phase (the interactive optimization method) where an LLM-based AI agent engages with users to refine, test, and explain optimization outcomes, making the entire process dynamic and responsive to real-time inputs and adjustments. In other words, the interactive optimization method may be implemented as a LLM-based AI agent that comprises all the modules described above for the interactive optimization method, and that interact with the user through a dedicated GUI or chat as discussed above.

### System Initialization

The initialization phase is critical for setting up the system to effectively model and optimize mechanical manufacturing processes. It comprises two main steps:
- Learning implicit relationships (learning method): Using machine learning models to uncover hidden dependencies between component properties and manufacturing parameters.
- Parameter optimization (method of use): Using the learned relationships to formulate and solve an optimization problem, yielding optimal manufacturing parameters for desired component properties.

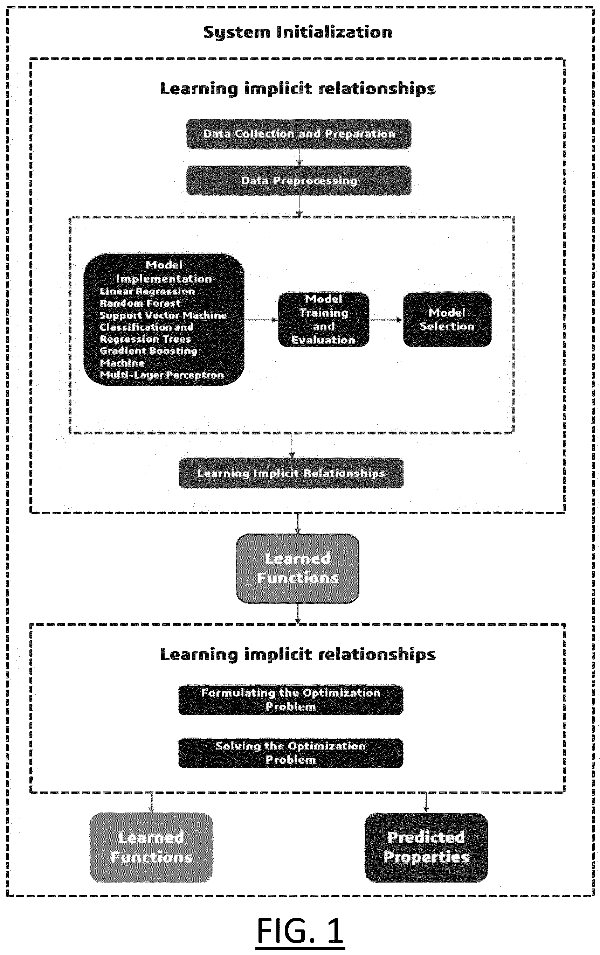

FIG. 1 shows a flowchart of implementations the system initialization.

After the initialization phase, where explicit relationships between parameters and properties have been established and optimal process parameters have been identified, the process enters the interactive phase (interactive optimization method). In this phase, an AI agent powered by a Large Language Model (LLM) facilitates seamless interaction with the designer. The AI agent allows the designer to:
- Test changes to process parameters and observe their impact on component properties.
- Add new constraints or parameters not initially considered.
- Request explanations of the solutions provided.

The AI agent acts as an intermediary between the designer and the optimization system, invoking the necessary computational models and solvers to provide accurate and insightful responses.

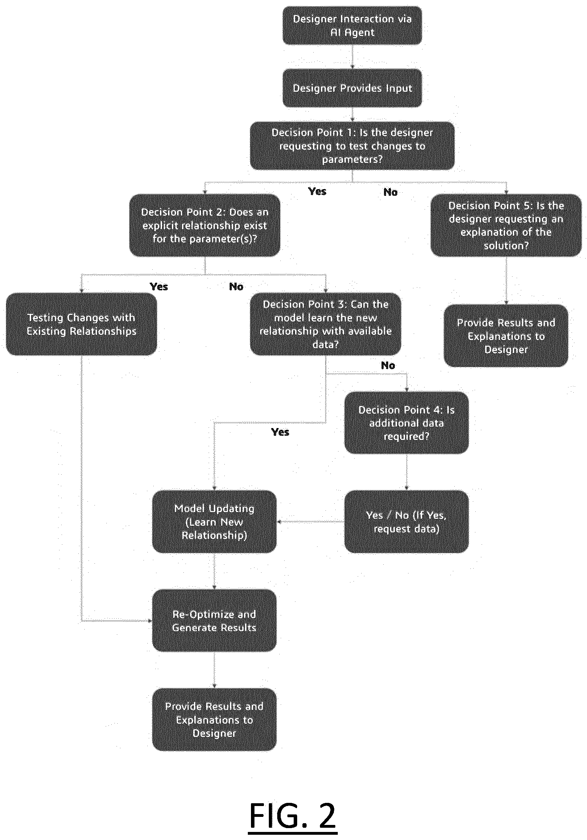

FIG. 2 shows a flowchart of implementations of the interactive phase.

The flowchart illustrates the interaction process between a designer and an AI agent within a system designed to optimize mechanical manufacturing processes through machine learning models and optimization techniques. The flowchart is organized into a series of decision points and actions that guide the interaction from initial input to the provision of results and explanations.

Examples of interaction scenarios in the interactive phase are now discussed. They illustrate that the AI agent handles various scenarios based on the designer's inputs.

### Scenario 1: Testing changes to process parameters with existing explicit relationships

### Description:

The designer wishes to modify one or more process parameters to see how these changes affect the component properties. Since explicit functions linking these parameters to properties already exist (from the initialization phase), the AI agent can directly use these functions.

### Process Flow:

### 1. Designer input:

∘ Example: "I want to increase the cutting speed by 15%. What will be the impact on tensile strength and production cost?"

### 2. AI agent actions:

∘ **Parameter adjustment:** Modifies the cutting speed parameter in the optimization model to reflect a 15% increase.
∘ **Re-optimization:** Invokes the optimization solver (CPLEX) to find new optimal values for the other parameters, ensuring all constraints are still satisfied.
∘ **Prediction:** Uses the explicit functions to predict the new component properties based on the adjusted parameters.
∘ **Explanation generation:** Prepares a textual explanation of the impact, including any trade-offs or significant changes.

### 3. Response to designer:

∘ **Results:**
   ▪ Predicted tensile strength: 770 MPa (a decrease of 1.3%)
   ▪ Production cost: €430 (a reduction of 4%)
∘ **Explanation:**
   ▪ "Increasing the cutting speed by 15% slightly reduces the tensile strength due to thermal effects on the material but decreases production cost owing to reduced machining time. The optimization adjusted the feed rate and tool type to mitigate the impact on tensile strength."

### Technical Details:

• **Optimization solver invocation:**
   ∘ The AI agent modifies the decision variables in the optimization problem to incorporate the designer's changes.
   ∘ Constraints and objectives are updated accordingly.
   ∘ The solver computes the new optimal solution.
• **Use of explicit functions:**
   ∘ The explicit functions *TS* = *f*(*x*) and *Cost* = *f*(*x*) are used to predict the properties based on the new parameters.

### Scenario 2: Testing changes to parameters without existing explicit relationships

### Description:

The designer wishes to modify a parameter that was not initially included in the explicit functions or wants to consider a new property. In this case, no explicit relationship exists between the parameter and the properties of interest.

### Process Flow:

1. **Designer input:**
   ∘ *Example:* "What happens to fatigue resistance if we switch to a new lubricant type, Lubricant C?"
2. **AI agent actions:**
   ∘ **Data verification:** Checks if Lubricant C is represented in the existing dataset and models.
      ▪ If not, the agent may prompt the designer for additional data or proceed with available information.
   ∘ **Model update:**
      ▪ **Learning phase:** Invokes the machine learning model to learn the relationship between the new parameter (lubricant type) and fatigue resistance.
      ▪ **Data augmentation:** May require additional data or simulate data based on existing patterns.
   ∘ **Re-optimization:**
      ▪ Updates the optimization problem to include the new parameter and its relationship to fatigue resistance.
      ▪ Solves the updated optimization problem using the solver.
   ∘ **Explanation Generation:** Prepares a detailed explanation of the findings.
3. **Response to Designer:**
   ∘ **Results:**
      ▪ Predicted fatigue resistance: 1.6 * 10⁶cycles (an increase of 6%)
      ▪ Production cost: 460€ (no significant change)
   ∘ **Explanation:**
      ▪ "Introducing Lubricant C is predicted to improve fatigue resistance due to better cooling and reduced tool wear. The machine learning model has been updated to include this parameter. The optimization suggests maintaining current cutting speed and feed rate to maximize benefits."

### Technical details:

• **Learning new relationships:**
   ∘ The AI agent uses the machine learning framework to retrain or update the model to include the new parameter.
• **Optimization problem update:**
   ∘ The decision variables and constraints are expanded to include the new parameter.
   ∘ The solver is invoked to find the new optimal solution, considering the updated model.

### Scenario 3: Requesting Explanations of Solutions

### Description:

The designer may request an explanation of the initial solution or any subsequent results provided by the system. The Al agent provides insights into how certain parameters affect the outcomes and the rationale behind the optimization decisions.

### Process Flow:

1. **Designer input:**
   ∘ *Example:* "Can you explain why the optimization chose tempering at 600°C for 2 hours as the heat treatment process?"
2. **AI agent actions:**
   ∘ **Analysis:**
      ▪ Reviews the optimization results and the contributing factors.
      ▪ Identifies the impact of the heat treatment process on the desired properties.
   ∘ **Explanation generation:**
      ▪ Compiles a detailed, yet understandable explanation highlighting key reasons.
3. **Response to designer:**
   ∘ **Explanation:**
      ▪ "Tempering at 600°C for 2 hours was selected to achieve the optimal balance between tensile strength and toughness. This heat treatment process reduces internal stresses and improves fatigue resistance, which aligns with the objectives of maximizing component performance. The optimization determined that this process offers the best trade-off without significantly increasing production cost."

### Technical Details:

- **Interpretability tools:**
   ∘ The AI agent uses model interpretability techniques such as feature importance analysis or sensitivity analysis to explain how different parameters influence the outcomes.
   ∘ Visualization tools can be provided to illustrate the relationships.

### Scenario 4: Multi-Parameter Changes

### Designer Input:

"I want to see the effect of using a higher carbon content (1.0%) and increasing the feed rate by 10%."

### AI Agent Actions:

- **Parameter adjustment:** Updates material composition and feed rate in the optimization model.
- **Re-Optimization:** Runs the solver to find new optimal parameters for other variables.
- **Results and explanation:**
   ∘ **Results:**
      ▪ Tensile strength: 800 MPa (increase of 2.5%)
      ▪ Fatigue resistance: 1.7 * 10⁷cycles (increase of 5.9%)
      ▪ Production cost: 470€ (increase of 4.4%)
   ∘ **Explanation:**
      ▪ "Increasing carbon content enhances tensile strength but may slightly increase brittleness. The higher feed rate reduces machining time but may affect surface finish. The optimization adjusted cutting speed to compensate, maintaining overall component performance."

### Scenario 5: Adding a New Constraint

### Designer Input:

"Ensure that the production cost does not exceed 450€ while maintaining tensile strength above 780 MPa."

### AI Agent Actions:

- **Constraint Addition:** Incorporates the new cost constraint into the optimization problem.
- **Re-Optimization:** Solves the updated problem using the solver.
- **Results and Explanation:**
   ∘ **Results:**
      ▪ Optimal parameters adjusted to meet the new constraints.
      ▪ Production cost: 450€
      ▪ Tensile strength: 780 MPa
   ∘ **Explanation:**

"To meet the cost constraint, the optimization suggests reducing the heat treatment duration. This maintains tensile strength at the desired level while lowering energy consumption and processing time, keeping costs within the specified limit."

Further possible implementation details for the LLM-based AI agent are now discussed. In the interactive phase, the method may leverage state-of-the-art Large Language Models (LLMs) to facilitate a sophisticated dialogue between the AI agent and the designer. Extensive testing was conducted by the inventors with several LLM architectures, including Mistral, Llamma, and OpenAI's gpt4 and gpt-4o, to determine the best fit for our application. These models were evaluated for their ability to understand and process complex manufacturing and design terminology and scenarios directly out of the box. The results were promising, showing that these models perform exceptionally well even without extensive fine-tuning. Instead of custom training, we enhance the LLMs' performance by strategically injecting relevant manufacturing-specific information into the model's context, enabling it to generate informed and accurate responses. This approach allows the AI agent to effectively interpret designer queries and provide insightful feedback, leveraging the inherent knowledge embedded within the LLMs.

Any of the method of use and of the interactive optimization method may provide/output a result of an optimization, which includes a set of optimal values of the design and/or manufacturing parameters for the product computed by solving the corresponding optimization problem. These optimal values yield optimal values of the properties of the product. Any of these methods may further comprise using this result for manufacturing the product, for manufacturing the product with the one or more properties optimized. Any of these methods may for example form a step of optimization of the properties within a design and manufacturing process, where for example the product is represented by a CAD model (*e.g.* of which some design parameters may be extracted and using as optimization parameters by the methods), as known *per se,* the process further comprising this step of using the optimization result (*e.g*. in addition to the CAD model) for manufacturing the product.

Using the result for manufacturing the product designates any real-world action or series of action that is/are involved in/participate to the manufacturing of the product/part, with the design and/or parameters of the product set to their optimal values. Using the result of the optimization for manufacturing may for example comprise one or more of the following steps:
- editing a model of the product (*e.g.* a CAD model) so that it has the design parameters with their optimal values;
- performing simulation(s) based on the model, such as simulations for validation of mechanical, use and/or manufacturing properties and/or constraints (*e.g*. structural simulations, thermodynamics simulation, aerodynamic simulations);
- editing the model based on the results of the simulation(s);
- optionally (*i.e*. depending on the manufacturing process used, the production of the mechanical product may or may not comprise this step), (*e.g.* automatically) determining manufacturing specifications/CAM specifications (*e.g*. stored as a manufacturing file/CAM file or as distributed CAM data stored on one or more storage (*e.g*. the specifications comprising manufacturing instructions for manufacturing the product represented by the model and/or control instructions for the manufacturing process and/or for commanding the manufacturing process or manufacturing tool(s) thereof)) based on the (*e.g.* edited) model (*e.g.* the control instructions stem from the CAD file or distributed CAD data storing the CAD model and/or specifications of the CAD model), for production/manufacturing of the manufacturing product. This step may additionally or alternatively include setting manufacturing parameters (*e.g.* cutting speed, cutting tool rotation speed, or the like) to their optimal values;
- sending the manufacturing specifications/CAM specifications to a factory in view of manufacturing the product represented by the model; and/or
- (*e.g.* automatically) producing/manufacturing, based on the determined manufacturing specifications/CAM specifications or on the model, the mechanical product originally represented by the model outputted by the method. This may include feeding (*e.g*. automatically) the manufacturing specifications/CAM specifications to the machine(s) performing the manufacturing process.

The methods disclosed herein are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 3 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method of machine-learning, for learning one or more relationships between a set of design and/or manufacturing parameters of a product to be manufactured and a set of one or more properties of the product, the method comprising:
- obtaining a training dataset comprising training examples, each training example comprising example values of the parameters of the set and corresponding ground truth values of the one or more properties; and
- training a machine-learning model based on the training dataset, the model being trained to infer the one or more relationships.

2. The method of claim 1, wherein training the machine-learning model comprises
- training several machine-learning models; and
- selecting the best models by rewarding a high model evaluation score.

3. The method of claim 2, wherein the several machine-learning models include two or any combination of:
- a linear regression model;
- a random forest model;
- a support vector machine (SVM) model;
- a classification and regression trees (CART) model;
- a gradient boosting machine (GBM) model; and
- a multi-layer perceptron (MLP) model.

4. A machine-learning model obtainable according to the method of any one of claims 1 to 3.

5. A computer-implemented method of use of the model of claim 4, for performing an optimization of at least one property of one or more properties of a product to be manufactured based on a set of design and/or manufacturing parameters of the product, the method of use comprising:
- by using one or more relationships inferred by the model between the set of parameters and the one or more properties, formulating an optimization problem for performing the optimization.

6. The method of claim 5, wherein formulating the optimization problem comprises formulating one or more objective functions for the optimization problem based on the one or more relationships.

7. The method of claim 6, wherein the one or more objective functions comprise:
- a function produced by the model; and/or
- one or more functions each representing a respective maximization or minimization relationship between at least one property and at least one parameter.

8. The method of claim 6 or 7, wherein formulating the optimization problem further comprises formulating one or more constraints for the optimization problem based on the model and/or on its training dataset.

9. The method of claim 8, wherein formulating one or more constraints for the optimization problem based on the model and/or on its training dataset comprises one or more of:
- determining one or more ranges of parameter values beyond which the model provides unreliable or unacceptable predictions;
- determining a boundary that the optimization must not cross based on outcomes of the model labeled unacceptable or acceptable;
- determining one or more thresholds of property values beyond which the model provides unreliable or unacceptable predictions; and/or
- determining a data region enclosing typical parameter values and outside of which parameters values are considered unacceptable.

10. The method of any one of claims 5 to 9, wherein the method further comprises solving the optimization problem.

11. The method of any one of claims 5 to 10, wherein the method further comprises:
- providing the optimization problem to a user;
- by the user, providing a text request related to the optimization problem, the request being one of:
∘ requesting a test of modification of one or more manufacturing and/or design parameters of the product; or
∘ requesting an explanation of a result of the optimization problem; and
- automatically:
∘ if the request is requesting an explanation of a result of the optimization problem, by a first trained LLM-based module, providing the explanation; and
∘ if the request is requesting a test of modification of one or more manufacturing and/or design parameters of the product, by a second trained LLM-based module, providing a result of the optimization problem based on the modification and on the one or more relationships.

12. The method of any one of claims 5 to 11, wherein the method further comprises using a result of the optimization for manufacturing the product with the optimized one or more properties.

13. A computer program comprising instructions which, when the program is executed by a computer system, cause the computer system to perform the method of any one of claims 1 to 3 and/or the method of any one of claims 5 to 12.

14. A computer-readable data storage medium having recorded thereon the computer program of claim 13 and/or the model of claim 4.

15. A computer system comprising a processor coupled to a memory, the memory having recorded thereon the computer program of claim 13 and/or the model of claim 4.
